Europäisches Patentamt

European Patent Office

Office européen des brevets

(19)

(11) Veröffentlichungsnummer: **0 143 203**
**B1**

(12) EUROPÄISCHE PATENTSCHRIFT

(45) Veröffentlichungstag der Patentschrift: 08.08.90

(21) Anmeldenummer: 84110294.0

(22) Anmeldetag: 29.08.84

(51) Int. Cl.⁵: **H 04 L 12/54, H 04 Q 11/04**

(54) Digitalkommunikationssystem mit Sternstruktur seiner Anschlussleitungen.

(30) Priorität: 01.09.83 DE 3331600

(43) Veröffentlichungstag der Anmeldung:
05.06.85 Patentblatt 85/23

(45) Bekanntmachung des Hinweises auf die
Patenterteilung:
08.08.90 Patentblatt 90/32

(84) Benannte Vertragsstaaten:
AT BE CH DE FR GB IT LI NL SE

(56) Entgegenhaltungen:
DE-A-2 730 772

ICC '79 CONFERENCE RECORD,
INTERNATIONAL CONFERENCE ON
COMMUNICATIONS, Boston, 10.-14. Juni 1979,
Band 3, Seiten 41.6.1 - 41.6.6, IEEE, New York,
US; J.F. BURNELL et al.: "Architecture and
evaluation of a packet switch for satellite
communications"

(73) Patentinhaber: Siemens Aktiengesellschaft
Wittelsbacherplatz 2
D-8000 München 2 (DE)

(72) Erfinder: Gerke, Peter, Dipl.-Ing.
Schiltbergstrasse 1
D-8032 Gräfelfing (DE)

(56) Entgegenhaltungen:
JAPAN TELECOMMUNICATIONS REVIEW, Band
21, Nr. 2, April 1979, Seiten 149-157, Tokyo, JP;
F. ISHINO et al.: "D50 packet switched network"

INTERNATIONAL SWITCHING SYMPOSIUM,
Paris, 7.-11. Mai 1979, Seiten 757-764; Y. IKEDA
et al.: "Virtual circuit switching system: a new
system concept for telephony and data
integration"

THE BELL SYSTEM TECHNICAL JOURNAL,
Band 62, Nr. 3, März 1983, Seiten 631-638,
American Telephone and Telegraph Co., New
York, US; A. ALBANESE: "Star network with
collision-avoidance circuits"

## Beschreibung

In der neureren Telekommunikationstechnik, insbesondere in der Bürokommunikation, treten zwei in ihrer Charakteristik sehr unterschiedliche Kommunikationskategorien auf: Zum einen der sog. Stream-Verkehr mit dem Profil etwa des Fernsprechverkehrs mit Verbindungsdauern in der Größenordnung von Minuten, Bitraten etwa von 64 bzw. 160 kbit/s (je Übertragungsrichtung) und relativ geringer Verbindungshäufigkeit; zum anderen der sogenannte Burst-Verkehr mit Kommunikationsdauern in der Größenordnung von Millisekunden, Bitraten etwa von 10 Mbit/s und großer Verbindungshäufigkeit.

Dem Stream-Verkehr, wie er etwa zwischen Geräten zur Sprach-, Text- oder Bildkommunikation stattfindet, ist — insbesondere in Verbindung mit dem Prinzip der "zentralen Vermittlung" — das Prinzip der Kanalvermittlung adäquat, demzufolge unabhängig vom momentanen Kommunikationszustand ein verbindungsindividueller Übertragungskanal jeweils für die Dauer der betreffenden Verbindung durchgeschaltet wird. Dies erfordert entsprechende Verbindungsaufbau- und -abbauzeiten, die indessen bei einem Burst-Verkehr, wie er etwa zur Verbindung von Subsystemen der Daten- und Textverarbeitung stattfindet, nicht tragbar sind, weshalb hier — insbesondere in Verbindung mit dem Prinzip der "dezentralen Vermittlung" — das Prinzip de Vermittlung auf Anforderung zur Anwendung kommt: Die Nutzinformationspakete, die jeweils die Zieladresse unmittelbar mit sich führen, werden allen am Anschlußnetz angeschlossenen Einrichtungen zugeführt und nur von der von der jeweiligen Zieladresse bezeichneten Empfängereinrichtung aufgenommen.

Für die erste Kommunikationskategorie, d.h. für zentral kanalvermittelten Stream-Verkehr, ist das diensteintegrierende digitale Fernmeldenetz (ISDN) optimal geeignet, auf das neuere Entwicklungen der Telekommunikationstechnik auf dem Wege über ein digitalisiertes Fernsprechnetz abzielen. Für die zweite Kommunikationskategorie, d.h. für dezentral auf Anforderung vermittelten Burst-Verkehr, werden sog. Local Area Networks (LAN) vorgesehen.

Das zunehmende Interesse an Local Area Networks beruht dabei auf einigen Vorteilen des Prinzips der dezentralen Vermittlung auf Anforderung in digitalen "In-House"-Netzen, wie eines einstufigen Koppelverfahrens ohne Wegesuche, der Eignung für unterschiedliche Bitraten der angeschlossenen Geräte und der Eignung für Burst-Verkehr. Auf der anderen Seite erfordert die Einrichtung eines Local Area Networks in der Regel die Neuverlegung eines geeigneten Übertragungsmediums, wobei es eines entsprechend aufwendigen Zugriffsverfahrens zum Vermeiden von Mehrfachzugriffen zu dem für alle Benutzer gemeinsamen Übertragungsmediums bedarf; für digitale Sprachkommunikation ist ein solches Local Area Network mit dezentraler Vermittlung auf Anforderung dennoch vergleichsweise weniger geeignet wegen des Teilnehmerindividuell relativ hohen Aufwandes sowie eines im allgemeinen zu geringen Datendurchsatzes und einer Beeinträchtigung der Kommunikationsqualität durch höhere Nachrichten Laufzeiten.

Ebenso indessen, wie Telekommunikationssysteme mit dezentraler Vermittlung nicht auf das Prinzip der Vermittlung auf Anforderung beschränkt sind, sind auch Telekommunikationssysteme mit zentraler Vermittlung nicht auf das Prinzip der Kanalvermittlung fixiert. So ist beispielsweise auch schon (z.B. aus DE—OS 27 30 772 oder aus BSTJ 62(1983)3, 631 ... 638) ein ein Sternnetz aufweisendes Fernmeldesystem bekannt, das eine zentrale Vermittlung nach Art einer Vermittlung auf Anforderung vorsieht, indem es z.B. (gemäß DE—OS 27 30 772) innerhalb der Vermittlungsstelle die einzelnen Nutzinformationsworte jeweils zusammen mit der Zieladresse sukzessive teilnehmerindividuell vorgesehenen, ringförmig zusammengeschalteten Empfangs- bzw. Auswahleinrichtungen zuführt, wobei das betreffende Nutzinformationswort nur von der durch die jeweilige Zieladresse bezeichneten Empfangseinrichtung über die betreffende Teilnehmeranschlußleitung zum Ziel-Teilnehmer übertragen wird, oder indem z.B. (gemäß BSTJ 62(1983)3, 631 ... 638) mittels beim Vermittlungsknoten teilnehmerindividuell vorgesehener Interface-Schaltungen ein von einem Teilnehgmer her ankommendes Paket nur dann zum Knoten hin, von dem aus sämtliche Teilnehmer ständig erreicht werden, durch geschaltet wird, wenn der Knotenbus momentan frei ist.

Eine solche zentrale Vermittlung auf Anforderung unter Verwendung eines zentralen Vermittlungsknotens (Telekommunikationskerns) setzt eine entsprechende Leistungsfähigkeit des Telekommunikationskerns voraus: Eine hohe Bitdurchsatzrate erfordert entsprechend kurze Durchschaltezeiten, wobei zugleich Mehrfachzugriffe zu dem eigentlichen Telekommunikationskern hinreichend sicher vermieden bleiben müssen. Ein hoher Bitdurchsatz durch einen eine Vielzahl von Anschlußleitungen zusammenfassenden Telekommunikationskern führt dabei schnell zu einem relativ hohen Aufwand an entsprechend schnellen Schaltungseinrichtungen, den indessen zu vermeiden die Erfindung einen Weg zeigt.

Die Erfindung betrifft ein Digital-Telekommunikationssystem mit Sternstruktur seiner Anschlußleitungen und mit zentraler Vermittlung auf Anforderung, unter Verwendung von den Zugriff der einzelnen Anschlußleitungen zu einem zentralen Telekommunikationskern regelnden, beim Telekommunikationskern teilnehmer-individuell vorgesehenen Zugriffssteuereinheiten; dieses Telekommunikationssystem ist erfindungsgemäß dadurch gekennzeichnet, daß die Zugriffssteuereinheiten jeweils in Gruppen unterteilt sind, so daß die den Zugang zu wenigstens einem der betreffenden Gruppe von Zugriffssteuereinheiten gemeinsam zugeordneten, jeweils eine Mehrzahl von Wartefeld-Speicherzellen aufweisenden Wartefeld-Speicher regeln, daß ein zyklisch betriebener Koppelschalter eingangsseitig mit den Wartefeld-Speichern und ausgangsseitig mit einer zentralen Paketspeicherzelle verbunden ist, so daß im Zuge einer zyklischen Abfrage der Wartefeld-Speicher jeweils eines der im jeweiligen Wartefeldspeicher enthaltenen Pakete in die zentrale Paketspeicherzelle übernommen wird, daß Mittel vorgesehen sind, die veranlassen, daß von der zentralen Paketspeicherzelle aus das betreffende Paket nach Maßgabe der in ihm enthaltenen Zieladresse über einen adressengesteuerten Koppelschalter zunächst in eine Koppelspeicherzelle gelangt, die einer die durch die Zieladresse bezeichnete Anschlußleitung enthaltenden Gruppe von Anschlußleitungen gemeinsam zugeordnet ist, und daß Mittel vorgesehen sind, die veranlassen, daß das Paket von der betreffenden Koppelspeicherzelle aus über zumindest eine weitere adressengesteuerte Koppelstufe zu der durch die Zieladresse bezeichneten Anschlußleitung durchgeschaltet wird.

Die Erfindung erleichtert mit der Konzentration auf jeweils eine Mehrzahl von Anschlußleitungen zusammenfassenden, zyklisch abgetasteten Wartefeldern das Vermeiden von Mehrfachzugriffen, indem es die Mehrfachzugriffssperre vom eigentlichen Hochgeschwindigkeits-Telekommunikationskern weg in einen Bereich niedrigerer Übertragungs- und Verarbeitungsgeschwindigkeiten hin vorverlegt; als Sperrprinzipien können dabei einfache Prinzipien angewendet werden wie z.B. das Anrufordnerprinzip oder sinngemäß das in den 50er-Jahren gebräuchliche "selbstsperrende Prüfvielfach". Die Wartefelder ermöglichen dabei dennoch die Informationsvermittlung über den zentralen Telekommunikationskern mit entsprechend hoher Geschwindigkeit, wobei sich etwaige Wartezeiten oder Verluste in den Zubringerkreisen noch dadurch verringern lassen, daß in weitere Ausgestaltung der Erfindung die Zugriffssteuereinheiten auch den Zugang ihrer Anschlußleitungen zu einem einer anderen Gruppe von Zugriffssteuereinheiten zugeordneten Wartefeldspeicher ermöglichen.

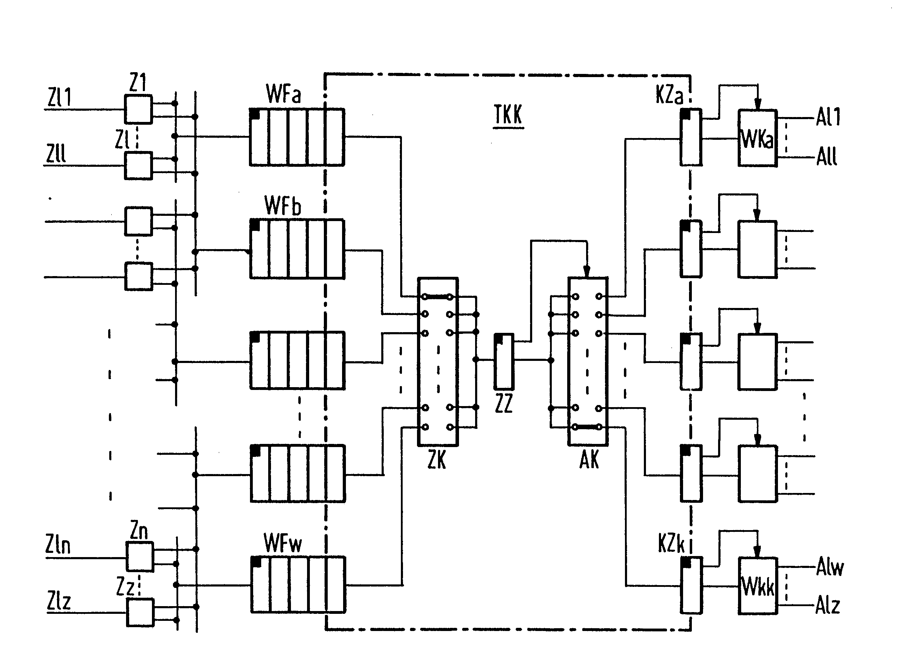

Anhand der Zeichnung sei die Erfindung noch näher erläutert.

In der Zeichnung ist schematisch in einem zum Verständnis der Erfindung erforderlichen Umfange ein Digital-Telekommunikationssystem gemäß der Erfindung dargestellt. Dieses Telekommunikationssystem weist an einen eine zentrale Vermittlung auf Anforderung ermöglichenden Vermittlungsknoten in einer Sternstruktur angeschlossene Anschlußleitungen auf, wobei diese Anschlußleitungen in der Zeichnung auf der einen Seite als Zubringerleitungen ZI1 ... ZIl; ...; ZIn ... ZIz und auf der anderen Seite als Abnehmerleitungen AI1 ... AIl; ...; AIn ... AIz dargestellt sind. Die Anschlußleitungen können dabei durch Teilnehmeranschlußleitungen des heute vorhandenen symmetrischen Teilnehmeranschlußnetzes gebildet sein, das immerhin für Bitraten bis zu ca. 2 Mbit/s geeignet ist; die einzelnen Anschlußleitungen können dabei auch mit zueinander unterschiedlichen Bitraten betrieben sein, z.B. mit 64 kbit/s, mit 2 Mbit/s und mit 4,8 kbit/s. Bei einem zentralen Telekommunikationskern TKK des Vermittlungsknotens anschlußleitungsindividuell vorgesehene Zugriffssteuereinheiten Z1 ... Zl; ...; Zn ... Zz regeln den Zugriff der einzelnen Zubringerleitungen ZI zu dem zentralen Telekommunikationskern TKK. Derartige Zugriffssteuerungen sind prinzipiell bekannt und brauchen daher hier nicht näher erläutert zu werden; es sei in diesem Zusammenhang lediglich bemerkt, daß wegen der räumlichen Konzentration der Zugriffssteuereinheiten Z außer den aus der LAN-Technik bekannten Zugriffsverfahren auch andere Möglichkeiten der Zugriffsregelung zur Anwendung kommen können, wie dies oben bereits erwähnt wurde.

In dem Telekommunikationssystem gemäß der Erfindung geschieht die Regelung des Zugriffs der Anschlußleitungen zum zentralen Telekommunikationskern nun, wie dies auch aus der Zeichnung ersichtlich ist, in der Weise, daß zunächst die beim Telekommunikationskern zubringerleitungsindividuell vorgesehenen, ebenso wie die Zubringerleitungen ZI1 ... ZIl; ...; ZIn ... ZIz in Gruppen unterteilten Zugriffssteuereinheiten Z1 ... Zl; ...; Zn ... Zz nur den Zugang ihrer jeweiligen Anschlußleitung zu wenigstens einem der betreffenden Gruppe gemeinsam zugeordneten, jeweils eine Mehrzahl von Speicherzellen aufweisenden Wartefeld-Speicher WFa; ...; WFw regeln. Auf den Zubringerleitungen ZI1 ... ZIl einer Zubringerleitungsgruppe in Richtung zum zentralen Telekommunikationskern übertragene Digitalsignale werden dabei mit Hilfe der zugehörigen Zugriffssteuereinheiten, im Beispiel der Zugriffssteuereinheiten ZI ... Zl, jeweils mit der zugehörigen Zieladresse zu einem Paket zusammengefaßt, in der Reihenfolge des Auftretens der einzelnen Pakete in den jeweils in Frage kommenden Wartefeld-Speicher, beispielsweise in den Wartefeld-Speicher WFa, eingegeben.

Geht man davon aus, daß beispielsweise über eine 2-Mbit/s-Zubringerleitung ZI etwa alle 8 µs ein 16-bit-Paket ankommen kann und daß die Übertragung dieses Pakets in einer demgegenüber wesentlich kürzeren Zeitspanne von z.B. 1 µs vollzogen wird, so kann bei Anwendung eines entsprechend schnellen Zugriffsverfahrens im Beispiel eine Gruppe von bis zu 8 Zubringerleitungen (ZI1 ... ZIl) auf ein Wartefeld (WFa) geschaltet sein, das dazu mut einer Bitdurchsatzrate von im Beispiel 16 Mbit/s betrieben wird. Wartezeiten oder Verluste kann man im übrigen herabsetzen, wenn, wie dies in der Zeichnung zusätzlich angedeutet ist, die Zugriffssteuereinheiten Z1 ... Zl ein und derselben Gruppe von Zugriffssteuereinheiten ebenso wie den Zugang ihrer Anschlußleitungen zu dem dieser Gruppe zugeordneten Wartefeld-Speicher WFa auch den Zugang ihrer Anschlußleitungen zu einem einer anderen Gruppe von Anschlußleitungen bzw. Zugriffssteuereinheiten zugeordneten Wartefeld-Speicher, im Beispiel dem Wartefeld-Speicher WFb, regeln, wobei entsprechendes auch für die übrigen Gruppen von Anschlußleitungen Zl und Zubringersteuereinheiten Z gilt.

Ausgangsseitig werden die Wartefeld-Speicher WFa . . . WFw mit Hilfe eines zyklisch betriebenen Koppelschalters ZK zyklisch abgefragt, wobei jeweils eines der im gerade abgefragten Wartefeld-Speicher WF enthaltenen Pakete vorzugsweise in Paralleldarstellung in eine zentrale Paketspeicherzelle ZZ übernommen wird. Die zentrale Paketspeicherzelle ZZ ist ausgangsseitig über einen adressiert steuerbaren Koppelschalter AK mit Koppelspeicherzellen KZa; . . . ; KZk verbindbar, die jeweils einer Gruppe von Abnehmerleitungen Al1 . . . All; . . . ; Aln . . . Alz zugeordnet sind. Wie auch in der Zeichnung agedeutet ist, wird dabei der Koppelschalter AK durch die Zieladresse des jeweils in der Paketspeicherzelle ZZ befindlichen Pakets gesteuert, so daß das betreffende Paket, vorzugsweise wiederum in Paralleldarstellung, nach Maßgabe seiner Zieladresse über den Koppelschalter AK gerade in diejenige Koppelspeicherzelle, beispielsweise die Koppelspeicherzelle KZk, gelangt, die der die durch die Zieladresse bezeichnete Abnehmerleitung, beispielsweise die Abnehmerleitung Alz, enthaltenden Abnehmerleitungsgruppe Aln . . . Alz zugeordnet ist.

Die Koppelspeicherzellen KZa . . . KZk sind ihrerseits ausgangsseitig über mindestens eine weitere Stufe adressengesteuerter Koppeleinrichtungen WKa . . . WKk mit den einzelnen Abnehmerleitungen Al der jeweiligen Gruppe von Abnehmerleitungen verbindbar. Wie auch in der Zeichnung angedeutet ist, wird dabei die jeweilige Koppeleinrichtung, beispielsweise die Koppeleinrichtung WKk, durch die Zieladresse des gerade betrachteten, im Beispiel in die Koppelspeicherzelle KZk gelangten Pakets gesteuert, so daß das betreffende Paket schließlich, nunmehr wieder in Seriendarstellung, zu der durch die Zieladresse bezeichneten Abnehmerleitunge, im Beispiel zu der Abnehmerleitung Alz, durchgeschaltet wird.

Die Paketdurchschaltung erfordert dabei nur in dem in der Zeichnung strichpunktiert umrissenen Hochgeschwindigkeitskern TKK eine hohe Bitdurchsatzrate von beispielsweise (bei w = 100 Anschlußleitungsgruppen und Wartefeldern) 1600 MBit/s, während man zwischen den Zubringerleitungen Zl und den Wartefeldern WF und ebenso zwischen den Koppelspeicherzellen KZ und den Abnehmerleitungen Al mit den oben genannten niedrigeren Bitraten auskommt.

Abschließend sei noch bemerkt, daß in der Zeichnung lediglich räumlich voneinander getrennte Anschlußleitungen dargestellt sind, daß in der Realisierung statt solcher durch räumlich voneinander getrennte Anschlußleitungen gegebener Übertragungskanäle aber auch durch Zeitkanäle von im Zeitmultiplex ausgenutzten Anschlußleitungen gegebene Übertragungskanäle vorgesehen sein können.

## Patentansprüche

1. Digital-Telekommunikationssystem mit Sternstruktur seiner Anschlußleitungen und mit zentraler Vermittlung auf Anforderung, unter Verwendung von den Zugriff der einzelnen Anschlußleitungen zu einem zentralen Telekommunikationskern regelnden, beim Telekommunikationskern teilnehmerindividuell vorgesehenen Zugriffssteuereinheiten, dadurch gekennzeichnet, daß die Zugriffssteuereinheiten (Z1 . . . Zz) jeweils in Gruppen (Z1 . . . Zl; . . . ; Zn . . . Zz) unterteilt sind; so daß sie den Zugang ihrer Anschlußleitungen (Zl1 . . . Zll; . . . ; Zln . . . Zlz) zu wenigstens einem der betreffenden Gruppe von Zugriffssteuereinheiten (Z1 . . . Zl) gemeinsam zugeordneten, jeweils eine Mehrzahl von Wartefeld-Speicherzellen aufweisenden Wartefeld-Speicher (WFa) regeln, daß ein zyklisch betriebener Koppelschalter (ZK) eingangsseitig mit den Wartefeld-Speichern (WFa . . . WFf) und ausgangsseitig mit einer zentralen Paketspeicherzelle (ZZ) verbunden ist, so daß im Zuge einer zyklischen Abfrage der Wartefeld-Speicher (WFa . . . WFw) jeweils eines der im jeweiligen Wartefeldspeicher (WF) enthaltenen Pakete in die zentrale Paketspeicherzelle (ZZ) übernommen wird, daß Mittel vorgesehen sind, die veranlassen, daß von der zentralen Paketspeicherzelle (ZZ) aus das betreffende Paket nach Maßgabe der in ihm enthaltenen Zieladresse über einen adressengesteuerten Koppelschalter (AK) zunächst in eine Koppelspeicherzelle (KZa . . . KZk) gelangt, die einer die durch die Zieladresse bezeichnete Anschlußleitung (Al1 . . . Alz) enthaltenden Gruppe (Al1 . . . All; . . . ; Aln . . . Alz) von Anschlußleitungen gemeinsam zugeordnet ist, und daß Mittel vorgesehen sind, die veranlassen, daß das Paket von der betreffenden Koppelspeicherzelle (KZa . . . KZk) aus über zumindest eine weitere adressengesteuerte Koppelstufe (WKa . . . WKk) zu der durch die Zieladresse bezeichneten Anschlußleitung (Al) durchgeschaltet wird.

2. Telekommunikationssystem nach Anspruch 1, dadurch gekennzeichnet, daß Zugriffssteuereinheiten (Z1 . . . Zl) so ausgebildet sind, daß sie auch den Zugang ihrer Anschlußleitungen (Zl1 . . . Zll) zu einem einer anderen Gruppe von Zugriffssteuereinheiten zugeordneten Wartefeldspeicher (WFb) regeln.

## Revendications

1. Système de télécommunication numérique, dont les lignes de raccordement sont disposées selon une structure en étoile et dans lequel est exécutée, sur demande, une commutation centrale, moyennant l'utilisation d'unités de commande d'accès, qui règlent l'accès des différentes lignes de raccordement à un noyau central de télécommunication et sont prévues individuellement pour les abonnés dans le noyau de télécommunication, caractérisé par le fait que les unités de commande d'accès (Z1 . . . Zz) sont réparties respectivement en groupes (Z1 . . . Zl; . . . ; Zn . . .

Zz) de manière qu'elles règlent l'accès de leurs lignes de raccordement (ZI1 ... ZII; ...; ZIn ... ZIz) à au moins une mémoire de zones d'attente (WFa), qui est associée en commun au groupe considéré d'unités de commande d'accès (Z ... ZI) et possèdent respectivement une multiplicité de cellules de mémoire, qu'un commutateur de couplage (ZK), qui fonctionne de façon cyclique, est raccordé, côté entrée, aux mémoires de zones d'attente (WFa ... WFw) et, côté sortie, à une cellule centrale (ZZ) d'une mémoire de paquets de manière que, lors d'une interrogation cyclique des mémoires de zones d'attente (WFa ... WFw), respectivement l'un des paquets contenus dans la mémoire respective de zones d'attente (WF), est transféré dans la cellule centrale (ZZ) de la mémoire de paquets, qu'il est prévu des moyens agissant de telle manière qu'à partir de la cellule centrale (ZZ) de la mémoire de paquets, le paquet considéré parvient tout d'abord, en fonction de l'adresse de destination qu'il contient, par l'intermédiaire d'un commutateur de couplage (AK) commandé au moyen d'une adresse, dans une cellule (KZa ... KZk) de la mémoire de couplage, qui est associée en commun à un groupe (AI ... AII; ...; AIn ... AIz) contenant la ligne de raccordement (AI ... AIz) désignée par l'adresse de destination, de lignes de raccordement, et qu'il est prévu des moyens agissant de telle manière que le paquet est transféré directement depuis la cellule considérée (KZa ... KZk) de la mémoire de couplage, par l'intermédiaire d'au moins un autre étage de couplage (WKa ... WKk) commandé par une adresse, jusqu'à la ligne de raccordement (AI) désignée par l'adresse de destination.

2. Système de télécommunication suivant la revendication 1, caractérisé par le fait que des unités de commande d'accès (Z1 ... ZI) sont agencées de telle manière qu'elles règlent également l'accès de leurs lignes de raccordement (ZI1 ... ZII) à une mémoire de zones d'attente (WFb) associée à un autre groupe d'unités de commande d'accès.

**Claims**

1. Digital telecommunication system with its subscriber lines in a star configuration and with central switching on request, utilizing access control units provided subscriber-specifically in the telecommunication core and controlling the access of the individual subscriber lines to a central telecommunication core, characterized in that the access control units (Z1 ... Zz) are divided in each case into groups (Z1 ... ZI; ...; Zn ... Zz) so that they control the access of their subscriber lines (ZI1 ... ZII; ...; ZIn ... ZIz) to at least one queuing field store (WFa) which is assigned jointly to the respective group of access control units (Z1 ... ZI) and has in each case a plurality of queuing field storage locations, in that a cyclically operated switch (ZK) is connected on the input side to the queuing field stores (WFa ... WFf) and on the output side to a central packet storage location (ZZ), so that, in the course of a cyclical polling of the queuing field stores (WFa ... WFw) in each case one of the packets contained in the respective queuing field store (WF) is transferred into the central packet storage location (ZZ), in that means are provided which cause the respective packet to travel from the central packet storage location (ZZ), in accordance with the destination address contained in said packet, via an address-controlled switch (AK), first of all to a switching storage location (KZa ... KZk), which is assigned joinly to a group (AI1 ... AII; ...; AIn ... AIz) of subscriber lines containing the subscriber line (AI1 ... AIz) designated by the destination address, and in that means are provided which cause the packet to be switched through from the respective switching storage location (KZa ... KZk) via at least one further address-controlling switching stage (WKa ... WKk) to the subscriber line (AI) designated by the destination address.

2. Telecommunication system according to Claim 1, characterized in that access control units (Z1 ... ZI) are designed in such a way that they also control the access of their subscriber lines (ZI1 ... ZII) to a queuing field store (WFb) assigned to another group of access control units.